# EUROPÄISCHE PATENTSCHRIFT

(11) **EP 2 747 910 B1**
(45) Veröffentlichungstag und Bekanntmachung des Hinweises auf die Patenterteilung: **11.05.2016**
(21) Anmeldenummer: 12766290.6
(22) Anmeldetag: 24.08.2012
(51) Int. Cl.: B09B 3/00, B02C 19/00, B02C 13/286, B02C 13/288, B02C 13/24, B02C 13/14, B02C 23/24

(54) **VERFAHREN UND VORRICHTUNG ZUR ZERKLEINERUNG VON INSBESONDERE MIT EINEM DRUCKGAS GEFÜLLTEN SPRAYDOSEN**
METHOD AND DEVICE FOR DISINTEGRATING SPRAY CANS FILLED IN PARTICULAR WITH A COMPRESSED GAS
PROCÉDÉ ET DISPOSITIF DE DÉSAGRÉGATION DE BOMBES AÉROSOLS EN PARTICULIER REMPLIES D'UN GAZ SOUS PRESSION

(30) Priorität: 26.08.2011 DE 102011111652
(43) Veröffentlichungstag der Anmeldung: 02.07.2014
(73) Patentinhaber: ProActor Schutzrechtsverwaltungs GmbH, 67308 Rüssingen (DE)
(72) Erfinder: SCHAEFER, Ralf, 67308 Ruessingen (DE)
(86) Internationale Anmeldenummer: PCT/EP2012/066530
(87) Internationale Veröffentlichungsnummer: WO 2013/030120

(56) Entgegenhaltungen:
- EP-A1- 1 422 000
- DE-A1- 10 045 241
- DE-A1- 19 535 554
- DE-C1- 3 713 477

## Beschreibung

Die Erfindung betrifft ein Verfahren und eine Vorrichtung zur Zerkleinerung von insbesondere mit einem Druckgas gefüllten Spraydosen gemäß dem Oberbegriff von Anspruch 1 und 10.
Aus dem Stand der Technik ist es bekannt, Bauteile, die aus verschiedenen Materialien zusammengesetzt sind, wie Metallteile, Glas, Gummi, Holz, Polymere, Faserstoffe, Verbundwerkstoffe, mit Pulver oder Kunststoff beschichtete Aluminiumprofile oder dergleichen, in Prallreaktoren zu verarbeiten, in denen die Bauteile durch die Schlageinwirkung von Prallelementen zerkleinert werden, die an einem mit hoher Drehzahl umlaufenden Rotor in einem zylindrischen Grundkörper aufgenommen sind.
Aus der EP 0 859 693 B1 sind in diesem Zusammenhang ein Verfahren und eine Vorrichtung zum Verarbeiten von Bauteilen aus Stoffgemischen, insbesondere Mischkunststoffen, bekannt, bei denen ein Prallreaktor, der in einem zylindrischen Grundkörper aufgenommen ist, einen durch einen Antriebsmotor drehbaren Rotor aufweist. Der in der Höhe im Grundkörper verstellbare Rotor besteht aus verschleißfestem Stahl und weist an seinen Enden lösbar aufgenommene Prallelemente auf, die die eingebrachten Bauteile durch die beim Auftreffen entstehende Prallbeanspruchung in unterschiedlich große Bruchstücke zerkleinern, welche anschließend voneinander getrennt werden können. Die genannte Schrift gibt keinen Hinweis darauf, wie eine Zerkleinerung von Spraydosen und die dabei freiwerdenden Inhaltsstoffe kontrollierbar sind.

Weitere gattungsgemäße Vorrichtungen und Verfahren sind in den Dokumente DE3713477C1 und DE19535554A1 beschrieben.
Demgemäß ist es eine Aufgabe der vorliegenden Erfindung, ein Verfahren und eine Vorrichtung zu schaffen, mit denen nicht mehr benötigte, gefüllte Spraydosen in kostengünstiger Weise zerkleinert und die darin enthaltenden Stoffe neutralisiert werden können.

Diese Aufgabe wird erfindungsgemäß durch ein Verfahren und eine Vorrichtung mit den Merkmalen von Anspruch 1 und 10 gelöst. Weitere Merkmale der Erfindung sind in den abhängigen Ansprüchen beschrieben.

Gemäß der Erfindung werden bei einem Verfahren zum Zerkleinern von insbesondere mit einem Druckgas gefüllten Spraydosen, diese in einen Prallreaktor eingebracht, der einen im Wesentlichen zylindrischen Grundkörper besitzt, in dessen nach außen hin im Wesentlichen luftdicht abgeschlossenem Innenraum ein Rotor mit wenigstens einem Prallelement rotiert, welches die in den Innenraum eingebrachten Spraydosen kontaktiert und unter Erzeugung eines hohen Impulsübertrags in Teilbestandteile zerkleinert. Das erfindungsgemäße Verfahren zeichnet sich dadurch aus, dass die Spraydosen dem Prallreaktor unter Ausschluss von Umgebungsluft zugeführt, innerhalb dessen Innenraum zerkleinert und die erzeugten Teilbestandteile der Spraydosen mit einem Bindemittel vermischt werden, welches gleichfalls unter Ausschluss der Umgebungsluft dem Innenraum des Prallreaktors zugeführt wird. Das Gemisch aus Teilbestandteilen der Spraydosen und dem Bindemittel wird im Anschluss an den Zerkleinerungsvorgang unter Ausschluss von eintretender Umgebungsluft aus dem Innenraum des Prallreaktors gefördert.

Durch die Erfindung wird es in vorteilhafter Weise ermöglicht, Spraydosen mit beliebigen Inhalten und Materialbeschaffenheiten zu zerkleinern. Dabei ist es verfahrensgemäß möglich, sowohl einzeln zugeführte Spraydosen als auch solche mit Umverpackungen und in Form von Kompositgebinden, d.h. metallische Dosen mit Kunststoffdeckel und Papierumhüllungen, zu behandeln. Selbst auf Holzpaletten befindliche Gebinde, z.B. Sechserdosenpacks, können dem erfindungsgemäßen Verfahren unterworfen werden. Ein Zerkleinerungsprozess von gefüllten Spraydosen in einem Prallreaktor, bei dem der Prallraum von der Umgebungsluft abgeschirmt und der von einer Evakuierung des Luft- und Gasgemisches aus dem Prallraum begleitet ist, schließt die Bildung einer explosiven Atmosphäre im Innenraum, dem Prallraum des Prallreaktors aus. Durch den Einsatz eines Bindemittels wird zwar das zerkleinerte Metall der Spraydosen, das heißt in der Regel Weißblech, mit diesem vermischt; allerdings nimmt das Bindemittel auch die festen Bestandteile des Spraydoseninhalts, wie z.B. Schaum, Flüssigkeit oder Creme auf, wodurch die sich anschließende Separierung der zerkleinerten Weißblechpartikel aus dem Gemenge in vorteilhafter Weise erleichtert wird. Dabei ist es von besonderem Vorteil, wenn das zu zerkleinernde Gut und das für die Bindung der festen oder flüssigen Bestandteile der Spraydosen eingesetzte Bindemittel vor Eintritt in den Prallreaktor eine Schleuse, bevorzugt eine Zellenradschleuse durchläuft. Dadurch ist es möglich, die mit den Spraydosen mitgeführte Umgebungsluft bereits in der Schleuse abzuziehen und die betreffende Schleusenkammer gegebenenfalls mit einem inerten Gas zu befüllen, sodass ein Nachströmen von Umgebungsluft selbst bei einer kontinuierlichen Zufuhr des Bindemittel vollständig ausgeschlossen wird. Mit der zuvor beschriebenen erfindungsgemäßen Verfahrensweise wird für den Innenraum des Prallreaktors ein Zerkleinerungsgut in einer bereits manipulierten Gasumgebung vorbereitet.

Nach einem weiteren der Erfindung zu Grunde liegenden Gedanken werden die bei der Zerkleinerung entstehenden Gase oder Gasgemische aus dem Prallraum evakuiert, wobei gegebenenfalls auch in diesem Behandlungsschritt ein inertes bzw. nicht brennbares Gas, wie insbesondere Stickstoff oder Kohlendioxid zugeführt wird.

Das Verfahren wird dabei zusätzlich verbessert, wenn die Zuführung und Absaugung von Luft, Gas und Gasgemischen einer Steuerung oder Regelung unterworfen wird. Bei der bevorzugten Ausführungsform der Erfindung wird hierzu insbesondere die Atmosphäre im Prallraum überwacht und verfahrensgünstig verändert, indem der Druck innerhalb des Prallraums überwacht wird. Weiterhin können die präsenten Gase und Gasgemische analysiert und die Messergebnisse ausgewertet werden. Dies stellt sicher, dass bei der Durchführung des Verfahrens keine unerwünschten Reaktionen und eventuell daraus resultierende Explosionen auftreten, welche zur Beschädigung des Prallreaktors oder von sonstigen Vorrichtungsteilen führen könnten.

Da sich neben Gasen, die insbesondere aus Butan oder einem Dimethylester bestehen, auch feste oder flüssige Bestandteile in den Spraydosen befinden, wird das im Prallreaktor nach dem erfindungsgemäßen Zerkleinerungsprozess vorhandene Gemenge oder Gemisch aus Weißblech und Bindemittel nach dem Ausschleusen aus dem Reaktor bevorzugt einem oder mehreren weiteren Trennprozessen unterworfen. Das Gemisch aus Teilbestandteilen der Spraydosen und das gesättigte oder auch freie Bindemittel wird hierzu über Auswurföffnungen einem Auswurfkasten zugeführt, der entweder selbst als Schleuse ausgebildet ist oder dem eine Schleuse, insbesondere eine Zellenradschleuse, nachgeordnet ist. Auch bei dieser Ausführungsform des erfindungsgemäßen Verfahrens werden die aus den Spraydosen entweichenden Gase einer Evakuierung der mitgeschleppten Gase in der Schleuse unterzogen, sodass schädliche Gase nicht ungehindert ins Freie gelangen können.

Alle in den vorangegangenen Verfahrensschritten entstandenen Teilbestandteile, Reststoffe und/oder Gase werden im Anschluss an einen oder mehrere Separationsprozesse bevorzugt einer Weiter- und Wiederverwertung zugeführt. Das verbleibende Gemisch aus der dem Auswurfkasten nachgeordneten Zellenradschleuse kann gepresst und dann ebenfalls weiteren Separierungsprozessen zugeführt werden. Die evakuierten Gase werden bevorzugt in einem Speicher gesammelt und entweder einer thermischen Verwertung zugeführt oder in einem weiteren Verfahrensprozess genutzt.

Die erfindungsgemäße Vorrichtung zur Durchführung des Verfahrens oder als eigenständige Vorrichtung umfasst zur Zerkleinerung der insbesondere mit einem Druckgas gefüllten Spraydosen einen Prallreaktor mit einem im Wesentlichen zylindrischen Grundkörper, in dessen nach außen hin im Wesentlichen luftdicht abgeschlossenen Innenraum ein Rotor mit wenigstens einem Prallelement rotiert, welches die in den Innenraum eingebrachten Spraydosen kontaktiert und unter Erzeugung eines hohen Impulsübertrages in Teilbestandteile zerkleinert.

Erfindungsgemäß besitzt die Vorrichtung eine an der Oberseite des zylindrischen Grundkörpers angeordnete Schleuse, die insbesondere als Zellenradschleuse ausgeführt ist, welcher die Spraydosen über eine Fördereinrichtung, beispielsweise ein Förderband, von oben her zugeführt werden. Die Zellenradschleuse fördert die Spraydosen unter Ausschluss von Umgebungsluft von oben her in den Innenraum des Prallreaktors. Die erfindungsgemäße Vorrichtung umfasst weiterhin eine Zufuhreinrichtung, beispielsweise ein weiteres Förderband, über welches ein Bindemittel bevorzugt zusammen mit den Spraydosen unter Ausschluss von Umgebungsluft in den Innenraum des Grundkörpers eingebracht wird. Am Umfang des Innenraums des Grundkörpers des Prallreaktors ist wenigstens einer Auswurföffnung angeordnet, die insbesondere durch ein Sieb verschließbar ist. Der Auswurföffnung des Prallreaktors ist ein Auswurfkasten nachgeordnet, aus welchem das Gemisch aus zerkleinerten Teilbestandteilen der Spraydosen und dem Bindemittel erfindungsgemäß unter Ausschluss von eintretender Umgebungsluft aus dem Innenraum des Prallreaktors heraus gefördert wird. Die erfindungsgemäße Vorrichtung besitzt den Vorteil, dass der Prallreaktor nur einem sehr geringen Verschleiß unterliegt und durch die eingesetzten Zellenradschleuse auch energetisch effizient betrieben und kostengünstig gefertigt werden kann.

Der Aufbau der Vorrichtung erfüllt durch die Abschottung des freigesetzten Gases zum einen mit einfachen Mitteln die umwelttechnischen Erfordernisse und gestattet andererseits in wirkungsvoller Art und Weise die Beherrschung der Parameter des Zerkleinerungsprozesses, sodass die Gase mit einer Reaktionsaffinität neutralisiert werden, d.h. insgesamt eine Explosionsgefahr im Prallraum weitestgehend ausgeschlossen wird. Die einzigen direkten Verschleißelemente sind die auf dem Rotor der Prallmühle befestigten Prallelemente, die bei Bedarf ohne großen Aufwand ausgetauscht werden können.

Als Schleusen werden bevorzugt vertikale Zellenradschleusen, d.h. Zellenradschleusen mit einer vertikalen Drehachse, verwendet. Insbesondere umfasst der Auswurfkasten bei einer weiteren besonders bevorzugten Ausführungsform der erfindungsgemäßen Vorrichtung eine weitere auslassseitige Zellenradschleuse, die eine mit Unterdruck beaufschlagte Zellenrad-Schleusenkammer enthält, welche das zerkleinerte Austragsgut passiert, bevor dieses aus dem Auswurfkasten zur weiteren Verwertung austritt.

Hierdurch ergibt sich gegenüber einer horizontal angeordneten Zellenradschleuse der Vorteil, dass die Blechbestandteile und Rückstände aus dem Sieb-Überlauf, die gegebenenfalls unvollständig zerkleinert sind, nicht in den Zwischenraum zwischen Zellenradwand und dem zylindrischen Zellenradgehäuse eindringen und dort zu einem Blockieren des Zellenrades führen können.

Um die Zeitdauer zum Absaugen der Umgebungsluft, bzw. des (brennbaren) Gases, aus der gerade geschlossenen Schleusenkammer zu vergrößern, können die eingangsseitige und/oder die ausgangsseitige Zellenradschleuse durch einen entsprechenden Motor intermittierend, d.h. schrittweise angetrieben werden, wobei die Verweildauer in der Evakuierungsposition vorzugsweise einstellbar ist und entsprechend dem gewünschten Durchsatz und Evakuierungsgrad gewählt wird.

Bei einer weiteren Ausführungsform der Erfindung ist es vorgesehen, dass der Auswurfkasten eine abschnittsweise in einem umfänglich geschlossenen Rohr rotierende Austragsschnecke umfasst, welche bevorzugt eine Schneckenwendel mit einer sich im Bereich des Rohres verringernden Ganghöhe besitzt, und welche das der Austragsschnecke zugeführte Austragsgut nach dessen Zerkleinerung aus dem Auswurfkasten heraus fördert. Diese Ausführungsform der Erfindung besitzt den Vorteil, dass der Innenraum des Auswurfkastens gegenüber der Umgebung hermetisch abgeschottet und das Austragsgut zusätzlich in zweckmäßigerweise verpresst wird.

Die Vorrichtung ist vorzugsweise mit entsprechenden Armaturen, Ventilen und Pumpen ausgestattet, die für die Durchführung der verfahrensgemäßen Steuerungs- und Regelungsprozesse eingesetzt werden. Insbesondere sind am Prallreaktor und an den Zellenradschleusen Zu- und Ableitungen vorgesehen, über die in Verbindung mit entsprechenden Pumpen Gas und Gasgemische evakuiert bzw. reaktionsneutrale Gase zugeführt werden. Bevorzugt werden solche Neutralisationsgase über eine die Motorwelle umgebende Labyrinthdichtung in den Prallraum eingeleitet. Alle im Zusammenhang mit dem Zerkleinerungsprozess erzeugten oder entstandenen Gase und Gasgemische werden über die vorgenannten Leitungen abgeführt und in geeigneten Sammelspeichern bevorratet, um diese dem Prozess entweder erneut wieder zuzuführen, oder aber auf eine andere Art und Weise, insbesondere thermisch, zu nutzen.

Ferner sieht eine entsprechend weitergeführte Ausführungsform der Erfindung vor, dass dem Innenraum des Prallreaktors wenigstens ein Drucksensor zugeordnet ist, der bei einem starken Druckanstieg innerhalb kurzer Zeit ein dem Innenraum des Prallreaktors zugeordnetes Sicherheitsventil öffnet, um im Fall einer Explosion eine Beschädigung des Innenraumes zuverlässig zu verhindern.

Die Erfindung wird nachfolgend mit Bezug auf die Zeichnungen anhand einer bevorzugten Ausführungsform beschrieben. In den Zeichnungen zeigen:
- Fig. 1: eine schematische Seitendarstellung der Vorrichtung in Richtung quer zur Auswurföffnung und
- Fig. 2: eine schematische Aufsicht auf die erfindungsgemäße Vorrichtung.

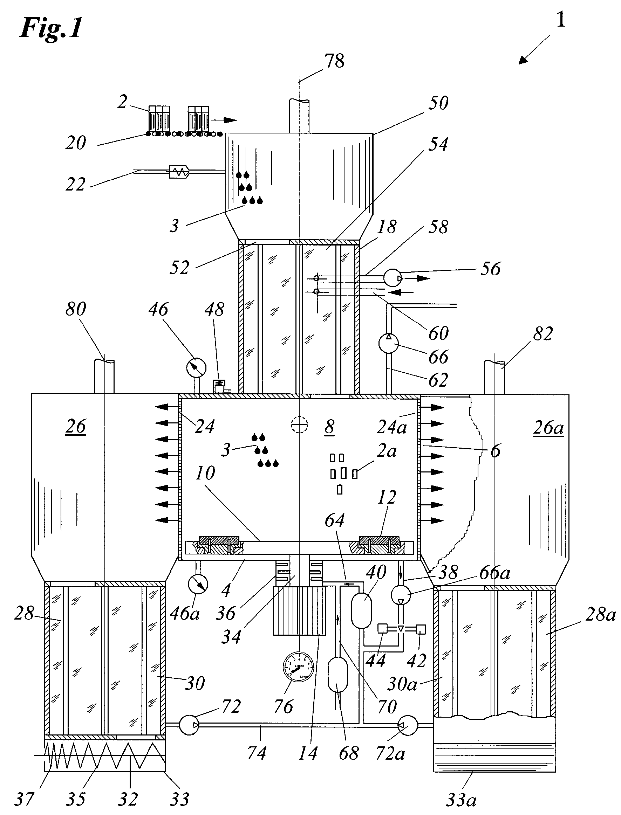

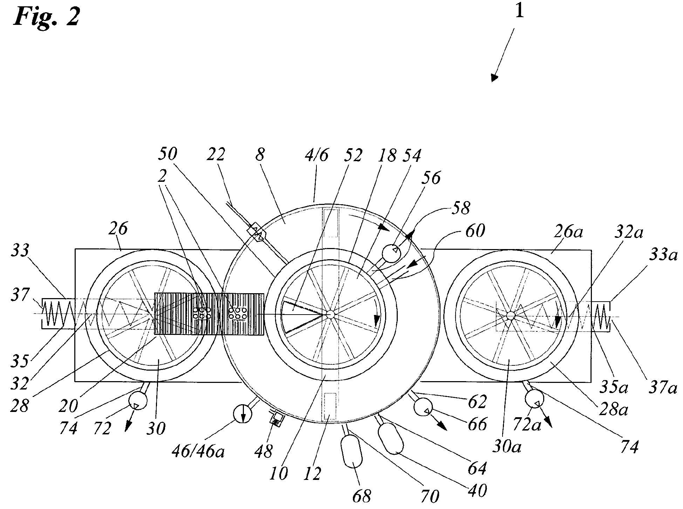

Wie in Fig. 1 und 2 gezeigt ist, umfasst eine erfindungsgemäße Vorrichtung 1 zur Zerkleinerung von Spraydosen 2 einen Prallreaktor 4, der einen im Wesentlichen zylindrischen Grundkörper 6 aufweist, in dessen geschlossenem Innenraum 8 ein Rotor 10 mit einer hohen Drehzahl rotiert, an dem mehrere bevorzugt austauschbare Prallelemente 12 aus einem hochfesten Werkstoff angeordnet sind. Der Antrieb des Rotors 10 erfolgt über einen Motor 14, der bevorzugt ein Elektromotor ist, jedoch auch ein Verbrennungsmotor oder der Motor eines Kraftfahrzeugs, z.B. eines Traktors sein kann, der den Rotor 10 über eine Zapfwelle und ein nicht näher gezeigtes Winkelgetriebe antreibt.

Über eine Fördereinrichtung 20, z.B. ein Transportband oder eine Rollenförderbahn, wird das zu zerkleinernde Material, hier Spraydosen 2, in einen Vorbehälter 50 eingebracht. Die Spraydosen 2 können sowohl einzeln als auch als Gebinde oder auch auf Paletten angefördert und zerkleinert werden. An der einlassseitigen Oberseite 16 des Prallreaktors 4 ist eine Zellenradschleuse 18 mit einer vertikal verlaufenden Drehachse 78 angeordnet, deren Größe entsprechend der Gesamtgröße des Zerkleinerungsgutes sowie des gewünschten Durchsatzes ausgelegt ist. Vom Vorbehälter 50 gelangen die Spraydosen 2 durch eine Schleusenöffnung 52 in eine erste Kammer der Zellradschleuse 18, die durch ihre radial umlaufende Schleusenkammerbewegung die aufgenommenen Spraydosen 2 gegenüber der Umgebung abschottet. Wenn die mit Spraydosen 2 befüllte Schleusenkammer 54 eine Position eingenommen hat, in der sie von der Schleusenöffnung 52 im Wesentlichen gasdicht getrennt ist, wird die Schleusenkammer 54 über eine Pumpe 56 und Leitung 58 mit Unterdruck beaufschlagt, so dass der Schleusenkammer die mit den Spraydosen 2 in die Schleusenkammer 54 eingetretene Umgebungsluft entzogen wird. Je nachdem welcher Inhalt sich in den Spraydosen 2 befindet, kann es zweckmäßig sein, die gegenüber der Außenluft bereits hermetisch abgeschottete Schleusenkammer 54 über die Zufuhrleitung 60 mit einem Inertgas zu befüllen. Durch das Einbringen von Inertgas wird in diesem Falle zusätzlich verhindert, dass Umgebungsluft in Form von Fehlluft, welche durch Undichtigkeitsstellen im Bereich der Kontaktstellen zwischen den Flügeln der Zellenradschleuse und der Innenwand des Zellenradgehäuses in die abgeschottete Schleusenkammer eintritt, nicht in den Innenraum des Prallreaktors gelangen kann. Dem gleichen Verfahrensablauf wird auch ein über die Zuführeinrichtung 22 in die Zellradschleuse 18 eingebrachtes Bindemittel 3 unterworfen, welches bevorzugt der Sieb-Überlauf aus der Kompostgewinnung aus Bioabfällen ist, d.h. der Abfall aus der Biomülltonne, der alle mögliche Arten von organischen Stoffen enthalten kann. Dieses wird dem Inhalt der Spraydosen 2 beigemischt, um diesen zu binden. Nach dem Eintritt der Spraydosen 2 und des Bindemittels 3 in den Innenraum 8 des Prallreaktors 4 werden diese durch die mit hoher Geschwindigkeit umlaufenden Prallelemente 12 zerkleinert, wobei die aus dem Druckkörper der Spraydosen entstehenden zerkleinerten Teilbestandteile 2a, welche insbesondere zu kleinen Klumpen mit einem Durchmesser von z.B. 2 bis 10 mm deformiert werden, mit dem Bindemittel 3 vermischt werden. Die Drehzahl des Rotors, die die Größe und Form der Materialbestandteile 2a bestimmt, wird in diesem Falle bevorzugt über einen Drehzahlmesser 76 erfasst und als Messgröße in einen Regelkreis mit einbezogen. In diesem Verfahrensschritt ist es von besonderer Bedeutung, Explosionen im Prallraum zu verhindern.

Wie der Anmelder in diesem Zusammenhang erkannt hat, wird der Rotor 10 mit einer Drehzahl betrieben, bei der die Umfangsgeschwindigkeit der mit den Spraydosen zusammentreffenden Bauteile des Rotors 10, insbesondere der Prallelemente, mindestens 28m/Sekunde beträgt, um in erfindungsgemäßer Weise Explosionen im Prallraum selbst dann zu vermeiden, wenn Umgebungsluft von außen her in den Prallraum eingedrungen sein sollte.

Die Erfindung sieht hierzu als weiteren Explosionsschutz alternativ oder zusätzlich vor, die Atmosphäre im Innenraum 8 des Prallreaktors 4 zu überwachen und durch steuernde oder regelnde Eingriffe zu manipulieren, d.h. kontinuierlich einen nichtexplosiven Reaktorinhalt sicherzustellen. Eine Pumpe 66 evakuiert hierzu über die Abzugsleitung 62 das im Innenraum 8 des Prallreaktors 4 befindliche Gasgemisch. Unmittelbar im Anschluss daran kann die Zusammensetzung des Gasgemisches analysiert und prozessgerecht verändert werden, indem über die Einspeiseleitungen 64 das in einem Speicher 40 vorgehaltene Gas aus den Spraydosen, welches bevorzugt zuvor aus dem Prallreaktor 4 abgesaugt wurde, wieder in diesen zugeführt wird. Das Gas kann beispielsweise im unteren Bereich des Prallreaktors von der Pumpe 66a über die Abzugsleitung 38 aus dem Innenraum 8 des Prallreaktors 4 abgesaugt werden, ähnlich wie dies im oberen Reaktorbereich durch die Pumpe 66 erfolgt.

Alternativ kann die Zusammensetzung der Atmosphäre im Prallraum auch durch die Einspeisung von Inertgas über die Leitung 70 aus einem weiteren Speicher 68 in der Weise verändert werden, dass der Sauerstoffanteil im Gasgemisch unterhalb der Explosionsgrenze liegt. Beide Gase strömen bevorzugt durch eine Labyrinthdichtung 36 im Bereich der Rotorwelle 34 in den Innenraum 8 des Prallreaktors 4 ein. Anstelle der Sammlung des Gases im Speicher 40 und/oder dessen Rückführung in den Prallraum, kann das Gas auch einem Verbrennungsmotor 42 oder einer Heizeinrichtung 44 zur thermischen Nutzung zugeführt werden.

Mittels der Drucksensoren 46, 46a, deren Messwerte ebenfalls kontinuierlich in den Regelkreislauf einfließen, wird der Innendruck im Prallraum überwacht. Über das Sicherheitsventil 48 kann ein nicht tolerierbarer Überdruck im Innenraum 8 des Prallreaktors 4 abgebaut werden.

Über die Auswurföffnungen 24, 24a verlassen die zerkleinerten Teilbestandteile 2a und das Bindemittel 3 den Innenraum 8 des Prallreaktors 4, wobei durch entsprechende Siebmechanismen bereits in diesem Verfahrensschritt unterschiedlich große Partikel und gegebenenfalls differierende Materialien selektiert werden können. Dadurch gelangt das Gemenge über die Auswurfkästen 26, 26a in die Zellenradschleusen 28, 28a, die bevorzugt ebenfalls vertikal ausgerichtete Drehachsen 80, 82 besitzen. Gegebenenfalls kann hierbei über die Pumpen 72, 72a, bzw. über die daran angeschlossene Leitung 74 eine Absaugung des Gases aus der jeweiligen Kammer 30, 30a der auslassseitigen Zellenradschleuse 28, 28a erfolgen, um das mit dem Austragsgut mitgeführte Gas abzusaugen und erneut in den Innenraum 8 des Prallreaktors 4 oder in den Speicher 40 einzuleiten.

Als Alternative zum Einsatz einer auslassseitigen Zellenradschleuse kann unterhalb der Auswurfkästen 26, 26a in einem umfänglich geschlossenen Rohr 33, 33a jeweils eine rotierende Austragsschnecke 32, 32a angeordnet sein. Die Schneckenwendel 35, 35a dieser Austragsschnecke besitzt dabei erfindungsgemäß eine sich verringernde Ganghöhe 37, 37a, wodurch das Austragsgut beim Herausfördern einer Verpressung unterworfen wird und der Auswurfkasten 26, 26a durch das verpresste, durch den Inhalt der Spraydosen 2 feuchtigkeitshaltige Gemisch aus Bindemittel 3 und zerkleinerten Teilbestandteilen 2a im Wesentlichen luftdicht von der Außenumgebung getrennt wird.

Das in der zuvor beschriebenen Weise zerkleinerte und aus dem Innenraum 8 des Prallreaktors ausgeschleuste Gemisch aus Metallblech, Bindemittel 3 und Sprühdoseninhalt wird dann beispielsweise einer weiteren elektromagnetischen Abscheidung oder einer Separation durch Siebe etc. unterzogen, und der verbleibende Restbestandteil aus Bindemittel und Spraydoseninhalt beispielsweise auch zusammen mit dem zuvor separierten brennbaren Treibgas einer energetischen Nutzung zugeführt.

Die Erfindung versteht unter einer hohen Geschwindigkeit der Prallelemente eine Geschwindigkeit, die ausreichend ist einen Impulsübertrag auf die Spraydosen zu ermöglichen um diese erfolgreich zu deformieren und zu zerkleinern.
Hochfeste Prallelemente sind dabei geeignet eine kostenwirtschaftliche Standzeit gegenüber der Prallbeanspruchung zu gewährleisten.

### Bezugszeichenliste: P0810

- 1: Vorrichtung
- 2: Spraydosen
- 2a: Teilbestandteil
- 3: Bindemittel
- 4: Prallreaktor
- 6: Grundkörper
- 8: Innenraum/ Prallraum
- 10: Rotor
- 12: Prallelemente
- 14: Motor
- 16: Oberseite von 6
- 18: Zellenradschleuse
- 20: Fördereinrichtung für 2
- 22: Zuführeinrichtung für 3
- 24: Auswurföffnung von 4
- 24a: Auswurföffnung von 4
- 26: Auswurfkasten
- 26a: Auswurfkasten
- 28: Zellenradschleuse von 26
- 28a: Zellenradschleuse von 26a
- 30: Kammer
- 30a: Kammer
- 32: Austragsschnecke
- 32a: Austragsschnecke
- 33: Rohr
- 33a: Rohr
- 34: Rotorwelle
- 35: Schneckenwendel
- 35a: Schneckenwendel
- 36: Labyrinthdichtung
- 37: verringerte Ganghöhe von 35
- 37a: verringerte Ganghöhe von 35a
- 38: Abzugsleitung
- 40: Speicher
- 42: Verbrennungsmotor
- 44: Heizeinrichtung
- 46: Drucksensor
- 46a: Drucksensor
- 48: Sicherheitsventil
- 50: Vorbehälter
- 52: Schleusenöffnung von 18
- 54: Schleusenkammer von 18
- 56: Pumpe an 18
- 58: Leitung (Abführung) an 18
- 60: Zufuhrleitung an 18
- 62: Abzugsleitung (am oberen Bereich von 4)
- 64: Einspeiseleitung (am unteren Bereich von 4)
- 66: Pumpe (am oberen Bereich von 4)
- 66a: Pumpe (am unteren Bereich von 4)
- 68: Speicher für Inertgas
- 70: Leitung zur Welle von 14
- 72: Pumpe an 28
- 72a: Pumpe an 28a
- 74: Leitung
- 76: Drehzahlmesser
- 78: Drehachse von 18
- 80: Drehachse von 28
- 82: Drehachse von 28a

## Patentansprüche

1. Verfahren zum Zerkleinern von insbesondere mit einem Druckgas gefüllten Spraydosen (2), wobei die Spraydosen (2) in einen Prallreaktor (4) eingebracht werden, der einen im Wesentlichen zylindrischen Grundkörper (6) besitzt, in dessen nach außen hin im Wesentlichen luftdicht abgeschlossenem Innenraum (8) ein Rotor (10) mit wenigstens einem Prallelement (12) rotiert, welches die in den Innenraum (8) eingebrachten Spraydosen (2) kontaktiert und unter Erzeugung eines hohen Impulsübertrags in Teilbestandteile (2a) zerkleinert,
**dadurch gekennzeichnet,**
**dass** die Spraydosen (2) dem Prallreaktor (4) unter Ausschluss von Umgebungsluft zugeführt, innerhalb dessen Innenraum (8) zerkleinert und die erzeugten Teilbestandteile (2a) der Spraydosen (2) mit einem Bindemittel (3) vermischt werden, welches unter Ausschluss von Umgebungsluft dem Innenraum (8) des Prallreaktors (4) zugeführt wird, und dass das Gemisch aus Teilbestandteilen (2a) der Spraydosen (2) und dem Bindemittel (3) unter Ausschluss von eintretender Umgebungsluft aus dem Innenraum (8) des Prallreaktors (4) gefördert wird.

2. Verfahren nach Anspruch 1,
**dadurch gekennzeichnet,**
**dass** die Spraydosen (2) und/oder das Bindemittel (3) vor dem Zuführen in den Prallreaktor (4) eine Schleuse, insbesondere eine Zellenradschleuse (18), durchlaufen.

3. Verfahren nach Anspruch 1 oder 2,
**dadurch gekennzeichnet,**
**dass** die Zellradschleuse (18) eine Schleusenkammer (54) aufweist, in der die mit den Spraydosen (2) eingebrachte Umgebungsluft entzogen und bei Bedarf ein Inertgas zugeführt wird.

4. Verfahren nach einem der vorhergehenden Ansprüche,
**dadurch gekennzeichnet,**
**dass** das Gemisch aus Teilbestandeilen (2a) der Spraydosen (2) und Bindemittel (3) aus dem Innenraum (8) des Prallreaktors (4) über Auswurföffnungen (24, 24a) mindestens einem Auswurfkasten (26, 26a) zugeführt wird und vor dem Austrag zur weiteren Verwertung eine Schleuse, insbesondere eine Zellenradschleuse (28, 28a), durchläuft.

5. Verfahren nach einem der vorhergehenden Ansprüche,
**dadurch gekennzeichnet,**
**dass** das Gemisch aus Teilbestandeilen (2a) der Spraydosen (2) und Bindemittel (3) beim Austrag aus dem Auswurfkasten (26, 26a) verpresst wird.

6. Verfahren nach einem der vorhergehenden Ansprüche,
**dadurch gekennzeichnet,**
**dass** der Druck innerhalb des Innenraumes (8) des Prallreaktors (4) und die Bestandteile und/oder das Mengenverhältnis der hierin befindlichen Gase insbesondere durch Mess-, Steuer- und / oder Regeleinheiten manipuliert wird.

7. Verfahren nach einem der vorhergehenden Ansprüche,
**dadurch gekennzeichnet,**
**dass** das im Innenraum (8) des Prallreaktors (4) beim Zerkleinern der Spraydosen (2) freigesetzte Treibgas aus dem Innenraum (8) abgeführt, insbesondere abgesaugt, wird.

8. Verfahren nach einem der vorhergehenden Ansprüche,
**dadurch gekennzeichnet,**
**dass** das aus dem Innenraum (8) des Prallreaktors (4) abgeführte Treibgas in einem Speicher (40) gesammelt wird.

9. Verfahren nach einem der vorhergehenden Ansprüche,
**dadurch gekennzeichnet,**
**dass** dem Innenraum (8) des Prallreaktors (4) ein reaktionsneutrales Gas, insbesondere ein Inertgas, zugeführt wird.

10. Vorrichtung (1) zur Zerkleinerung von, insbesondere mit einem brennbaren Druckgas gefüllten, Spraydosen (2), umfassend einen Prallreaktor (4), der einen im Wesentlichen zylindrischen Grundkörper (6) besitzt, in dessen nach außen hin im Wesentlichen luftdicht abgeschlossenem Innenraum (8) ein Rotor (10) mit wenigstens einem Prallelement (12) rotiert, welches die in den Innenraum (8) eingebrachten Spraydosen (2) kontaktiert und unter Erzeugung eines hohen Impulsübertrags in Teilbestandteile (2a) zerkleinert, **gekennzeichnet durch**
eine an der Oberseite (16) des zylindrischen Grundkörpers (6) angeordnete Schleuse, insbesondere Zellenradschleuse (18), welche die Spraydosen (2) über eine Fördereinrichtung (20) zugeführt werden, und die die Spraydosen (2) unter Ausschluss von Umgebungsluft von oben her in den Innenraum (8) fördert, mit einer Zufuhreinrichtung (22) zur Zufuhr eines Bindemittels (3), welches von der Zufuhreinrichtung (22) unter Ausschluss von Umgebungsluft in den Innenraum (8) des Grundkörpers (6) eingebracht wird und mit mindestens einem einer jeweiligen Auswurföffnung (24, 24a) des Prallreaktors (4) nachgeordneten Auswurfkasten (26, 26a), aus welchem das Gemisch aus den zerkleinerten Teilbestandteile (2a) der Spraydosen (2) und dem Bindemittel (3) unter Ausschluss von eintretender Umgebungsluft aus dem Innenraum (8) des Prallreaktors (4) gefördert wird.

11. Vorrichtung nach Anspruch 10,
**dadurch gekennzeichnet,**
**dass** der Auswurfkasten (26, 26a) eine weitere auslassseitige Zellenradschleuse (28, 28a) umfasst, die eine mit Unterdruck beaufschlagte Zellenrad-Schleusenkammer (30, 30a) aufweist, welche das zerkleinerte Austragsgut passiert, bevor dieses aus dem Auswurfkasten (26, 26a) zur weiteren Verwertung austritt.

12. Vorrichtung nach einem der Ansprüche 10 oder 11,
**dadurch gekennzeichnet,**
**dass** der Auswurfkasten (26, 26a) eine abschnittsweise in einem umfänglich geschlossenen Rohr (33, 33a) rotierende Austragsschnecke (32, 32a) umfasst, welche eine Schneckenwendel (35, 35a) mit einer sich im Bereich des Rohres verringernden Ganghöhe (37, 37a) enthält, und welche das der Austragsschnecke (32, 32a) zugeführte Austragsgut nach dessen Zerkleinerung aus dem Auswurfkasten (26, 26a) heraus fördert.

13. Vorrichtung nach einem der Ansprüche 10 bis 12,
**dadurch gekennzeichnet,**
**dass** die Schleusen vertikale Zellenradschleusen (18, 28, 28a) mit einer jeweils vertikal verlaufenden Drehachse (78, 80, 82) sind.

14. Vorrichtung nach einem der Ansprüche 10 bis 13,
**dadurch gekennzeichnet,**
**dass** im Bereich der Rotorwelle (34) des Prallreaktors (4) eine Labyrinthdichtung (36) vorgesehen ist, über die ein Inertgas, insbesondere Stickstoff, oder ein in den Spraydosen (2) enthaltenes Treibgas in den Innenraum (8) des Prallreaktors (4) zugeführt wird.

15. Vorrichtung nach einem der Ansprüche 10 bis 14,
**dadurch gekennzeichnet,**
**dass** der Innenraum (8) des Prallreaktors (4) mit mindestens einer Abzugsleitung (38, 62) zum Abführen des beim Zerkleinern der Spraydosen (2) im Innenraum (8) des Prallreaktors (4) freigesetzten Treibgases aus dem Innenraum (8) verbunden ist.

16. Vorrichtung nach einem der Ansprüche 10 bis 15,
**dadurch gekennzeichnet,**
**dass** die Abzugsleitung (38 und/oder 62) mit einem Druckgasspeicher (40), einem Verbrennungsmotor (42) zur Verbrennung der Treibgase oder einer Heizeinrichtung (44) zur Erzeugung von Wärmeenergie aus dem Treibgas versehen ist.

17. Vorrichtung nach einem der Ansprüche 10 bis 16,
**dadurch gekennzeichnet,**
**dass** dem Innenraum (8) des Prallreaktors (4) wenigstens ein Drucksensor (46, 46a) zugeordnet ist, der bei einem starken Druckanstieg innerhalb kurzer Zeit ein dem Innenraum (8) des Prallreaktors (4) zugeordnetes Sicherheitsventil (48) öffnet, um im Fall einer Explosion eine Beschädigung des Innenraumes (8) zu verhindern.

## Claims

1. A method for disintegrating spray cans (2) filled in particular with a compressed gas, wherein the spray cans (2) are introduced into an impact reactor (4), which has a substantially cylindrical main body (6), in the internal space (8) of which a rotor (10) rotates with at least one impact element (12), said internal space (8) being sealed off in an airtight manner from the ambient environment, and said impact element (12) making contact with the spray cans (2) introduced into the internal space (8) and disintegrating said cans into subcomponents (2a) by producing a high momentum transfer, **characterized in that** the spray cans (2) are supplied to the impact reactor (4) under exclusion of ambient air, are disintegrated within its internal space (8), and the produced subcomponents (2a) of the spray cans (2) are mixed with a binder (3), which is supplied under exclusion of ambient air to the internal space (8) of the impact reactor (4), and the mixture of subcomponents (2a) of the spray cans (2) and the binder (3) is conveyed under exclusion of entering ambient air out of the internal space (8) of the impact reactor (4).

2. A method according to claim 1, **characterized in that** the spray cans (2) and/or the binder (3) pass through a feeder, especially a rotary feeder (18), prior to feeding to the impact reactor (4).

3. A method according to claim 1 or 2, **characterized in that** the rotary feeder (18) comprises a feeder chamber (54) in which the ambient air introduced with the spray cans (2) is removed and an inert gas is supplied as required.

4. A method according to one of the preceding claims, **characterized in that** the mixture of the subcomponents (2a) of the spray cans (2) and binder (3) is supplied from the internal space (8) of the impact reactor (4) via ejection openings (24, 24a) of at least one ejection box (26, 26a), and passes through a feeder, especially a rotary feeder (28, 28a), prior to discharge for further utilisation.

5. A method according to one of the preceding claims, **characterized in that** the mixture of subcomponents (2a) of the spray cans (2) and binder (3) is pressed during discharge from the ejection box (26, 26a).

6. A method according to one of the preceding claims, **characterized in that** the pressure within the internal space (8) of the impact reactor (4) and the components and/or quantitative proportion of the gases contained therein is manipulated especially by measuring, controlling and/or regulating units.

7. A method according to one of the preceding claims, **characterized in that** the propellant released in the internal space (8) of the impact reactor (4) during disintegration of the spray cans (2) is extracted from the internal space (8), especially by suction.

8. A method according to one of the preceding claims, **characterized in that** the propellant discharged from the internal space (8) of the impact reactor (4) is collected in a storage unit (40).

9. A method according to one of the preceding claims, **characterized in that** a reaction-neutral gas, especially an inert gas, is supplied to the internal space (8) of the impact reactor (4).

10. An apparatus (1) for disintegrating spray cans (2), especially filled with a combustible compressed gas, comprising an impact reactor (4), which has a substantially cylindrical main body (6), in the internal space (8) of which a rotor (10) rotates with at least one impact element (12), said internal space (8) being sealed off in an airtight manner from the ambient environment, and said impact element (12) making contact with the spray cans (2) introduced into the internal space (8) and disintegrating said cans into subcomponents (2a) by producing a high momentum transfer, **characterized by** a feeder, especially a rotary feeder (18), which is arranged on the upper side (16) of the cylindrical main body (6) and which is supplied with the spray cans (2) via a conveying device (20), and which conveys the spray cans (2) under exclusion of ambient air from above into the internal space (8), having a feed device (22) for feeding a binder (3), which is introduced by the feed device (22) under exclusion of ambient air into the internal space (8) of the main body (6), and having at least one ejection box (26, 26a), which is arranged downstream of a respective ejection opening (24, 24a) of the impact reactor (4) and from which the mixture of disintegrated subcomponents (2a) of the spray cans (2) and the binder (3) is conveyed under exclusion of entering ambient air from the internal space (8) of the impact reactor (4).

11. An apparatus according to claim 10, **characterized in that** the ejection box (26, 26a) comprises a further rotary feeder (28, 28a) on the outlet side, which comprises a rotary feeder chamber (30, 30a) which is supplied with a vacuum and which is passed by the disintegrated discharge material before it leaves the ejection box (26, 26a) for further utilisation.

12. An apparatus according to one of the claims 10 or 11, **characterized in that** the ejection box (26, 26a) comprises a delivery worm (32, 32a) which rotates in part in a circumferentially enclosed pipe (33, 33a) and contains a screw pitch (35, 35a) with a pitch (37, 37a) which decreases in the region of the pipe and which conveys the discharge material supplied to the delivery worm (32, 32a) out of the ejection box (26, 26a) after its disintegration.

13. An apparatus according to one of the claims 10 to 12, **characterized in that** the feeders are vertical rotary feeders (18, 28, 28a) with a respectively vertically extending rotational axis (78, 80, 82).

14. An apparatus according to one of the claims 10 to 13, **characterized in that** a labyrinth seal (36) is provided in the region of the rotor shaft (34) of the impact reactor (4), via which an inert gas, especially nitrogen, or a propellant contained in the spray cans (2) is supplied to the internal space (8) of the impact reactor (4).

15. An apparatus according to one of the claims 10 to 14, **characterized in that** the internal space (8) of the impact reactor (4) is connected to at least one venting conduit (38, 62) for discharging the propellant from the internal space (8), which propellant is released during the disintegration of the spray cans (2) in the internal space (8) of the impact reactor (4).

16. An apparatus according to one of the claims 10 to 15, **characterized in that** the venting conduit (38 and/or 62) is provided with a compressed-gas storage unit (40), an internal combustion engine (42) for combusting the propellants, or a heating device (44) for generating thermal energy from the propellant.

17. An apparatus according to one of the claims 10 to 16, **characterized in that** at least one pressure sensor (46, 46a) is associated with the internal space (8) of the impact reactor (4), said pressure sensor opening a safety valve (48), which is associated with the internal space (8) of the impact reactor (4), within a short period of time in the event of a strong pressure increase in order to prevent damage to the internal space (8) in case of an explosion.

## Revendications

1. Procédé pour broyer des récipients atomiseurs (2), en particulier remplis d'un gaz sous pression, dans lequel les récipients atomiseurs (2) sont introduits dans un réacteur à percussion (4) qui possède un corps (6) sensiblement cylindrique avec un espace intérieur (8) fermé de manière sensiblement hermétique à l'air vis-à-vis de l'extérieur, dans lequel tourne un rotor (10) muni d'au moins un élément percuteur (12) qui vient en contact avec les récipients atomiseurs (2) introduits dans l'espace intérieur (8) et les broie en morceaux (2a) en produisant une forte transmission d'impulsions,
**caractérisé en ce que** les récipients atomiseurs (2) sont amenés dans le réacteur de percussion (4) en excluant l'air ambiant, broyés dans l'espace intérieur (8) de celui-ci, et les morceaux (2a) du récipients atomiseurs (2) obtenus sont mélangés à un liant (3) qui est amené en excluant l'air ambiant dans l'espace intérieur (8) du réacteur de percussion (4), et **en ce que** le mélange de morceaux (2a) des récipients atomiseurs (2) et de liant (3) est acheminé, sans laisser entrer l'air ambiant, hors de l'espace intérieur (8) du réacteur de percussion (4).

2. Procédé selon la revendication 1, **caractérisé en ce que** les récipients atomiseurs (2) et/ou le liant (3) passent par une écluse, en particulier une écluse à roue cellulaire (18), avant d'être amenés dans le réacteur de percussion (4).

3. Procédé selon la revendication 1 ou 2, **caractérisé en ce que** l'écluse à roue cellulaire (18) comporte une chambre d'écluse (54) dans laquelle l'air ambiant introduit avec les récipients atomiseurs (2) est extrait et un gaz inerte est amené si nécessaire.

4. Procédé selon l'une des revendications précédentes, **caractérisé en ce que** mélange de morceaux (2a) des récipients atomiseurs (2) et de liant (3) sortant de l'espace intérieur (8) du réacteur de percussion (4) est amené par des ouvertures d'éjection (24, 24a) à au moins un caisson d'éjection (26, 26a) et traverse une écluse, en particulier une écluse à roue cellulaire (28, 28a), avant de sortir vers la suite de la valorisation.

5. Procédé selon l'une des revendications précédentes, **caractérisé en ce que** le mélange de morceaux (2a) des récipients atomiseurs (2) et de liant (3) est compressé à sa sortie du caisson d'éjection (26, 26a).

6. Procédé selon l'une des revendications précédentes, **caractérisé en ce que** la pression dans l'espace intérieur (8) du réacteur de percussion (4) et les composants et/ou les proportions des gaz qui s'y trouvent sont manipulés, en particulier par des unités de mesure, de commande et/ou de régulation.

7. Procédé selon l'une des revendications précédentes, **caractérisé en ce que** le gaz propulseur libéré dans l'espace intérieur (8) du réacteur de percussion (4) lors du broyage des récipients atomiseurs (2) est évacué de l'espace intérieur (8), en particulier aspiré.

8. Procédé selon l'une des revendications précédentes, **caractérisé en ce que** le gaz propulseur extrait de l'espace intérieur (8) du réacteur de percussions (4) est recueilli dans un accumulateur (40).

9. Procédé selon l'une des revendications précédentes, **caractérisé en ce qu'**un gaz ayant une réactivité neutre, en particulier un gaz inerte, est amené dans l'espace intérieur (8) du réacteur à percussion (4).

10. Dispositif (1) pour le broyage de récipients atomiseurs (2), en particulier remplis d'un gaz propulseur inflammable, comprenant un réacteur à percussion (4) qui possède un corps (6) sensiblement cylindrique avec un espace intérieur (8) fermé de manière sensiblement hermétique à l'air vis-à-vis de l'extérieur, dans lequel tourne un rotor (10) muni d'au moins un élément percuteur (12) qui vient en contact avec les récipients atomiseurs (2) introduits dans l'espace intérieur (8) et les broie en morceaux (2a) en produisant une forte transmission d'impulsions, **caractérisé en ce qu'**il comporte une écluse, en particulier une écluse à roue cellulaire (18), disposée sur la face supérieure (16) du corps cylindrique (6) et qui reçoit les récipients atomiseurs (2) acheminés par un dispositif de transport (20) et achemine les récipients atomiseurs (2) par le haut dans l'espace intérieur (8) en excluant l'air ambiant, avec un dispositif d'alimentation (22) pour amener un liant (3) qui est amené par le dispositif d'alimentation (22) dans l'espace intérieur (8) du corps (6) en excluant l'air ambiant et avec au moins un caisson d'éjection (26, 26a) faisant suite à au moins une ouverture d'éjection (24, 24a) correspondante du réacteur à percussion (4), à partir duquel le mélange de morceaux broyés (2a) des récipients atomiseurs (2) et de liant (3) est acheminé hors de l'espace intérieur (8) du réacteur de percussion (4) sans laisser entrer l'air ambiant.

11. Dispositif selon la revendication 10, **caractérisé en ce que** le caisson d'éjection (26, 26a) comprend une autre écluse à roue cellulaire (28, 28a) du côté de la sortie, qui présente une chambre d'écluse à roue cellulaire (30, 30a) sous dépression qui laisse passer le matériau broyé sortant avant que celui-ci sorte du caisson d'éjection (26, 26a) vers la suite de sa valorisation.

12. Dispositif selon l'une des revendications 10 ou 11, **caractérisé en ce que** le caisson d'éjection (26, 26a) comprend une vis sans fin d'extraction (32, 32a) tournant par sections dans un tube (33, 33a) fermé sur sa circonférence, qui contient une hélice de vis sans fin (35, 35a) dont la hauteur de spires (37, 37a) diminue au niveau du tuyau et qui évacue le matériau sortant amené à la vis sans fin d'extraction (32, 32a) hors du caisson d'éjection (26, 26a) après qu'il a été broyé.

13. Dispositif selon l'une des revendications 10 à 12, **caractérisé en ce que** les écluses sont des écluses à roue cellulaire verticales (18, 28, 28a) avec chacune un axe de rotation (78, 80, 82) vertical.

14. Dispositif selon l'une des revendications 10 à 13, **caractérisé en ce qu'**il est prévu au niveau de l'arbre de rotor (34) du réacteur à percussion (4) un joint à labyrinthe (36) à travers lequel un gaz inerte, en particulier de l'azote, ou un gaz propulseur contenu dans les récipients atomiseurs (2) est amené dans l'espace intérieur (8) du réacteur à percussion (4).

15. Dispositif selon l'une des revendications 10 à 14, **caractérisé en ce que** l'espace intérieur (8) du réacteur à percussion (4) communique avec au moins une conduite d'extraction (38, 62) pour évacuer le gaz propulseur libéré dans l'espace intérieur (8) du réacteur à percussion (4) lors du broyage des récipients atomiseurs (2) hors de l'espace intérieur (8).

16. Dispositif selon l'une des revendications 10 à 15, **caractérisé en ce que** la conduite d'extraction (38 et/ou 62) est munie d'un accumulateur de gaz sous pression (40), d'un moteur à combustion interne (42) pour la combustion des gaz propulseurs ou d'une installation de chauffage (44) pour la génération d'énergie thermique à partir du gaz propulseur.

17. Dispositif selon l'une des revendications 10 à 16, **caractérisé en ce que** l'espace intérieur (8) du réacteur à percussion (4) est associé à au moins un capteur de pression (46, 46a) qui ouvre une soupape de sécurité (48) associée à l'espace intérieur (8) du réacteur à percussion (4) en cas d'augmentation rapide et importante de la pression afin d'empêcher que l'espace intérieur (8) soit endommagé en cas d'explosion.
